# EUROPEAN PATENT SPECIFICATION

(11) **EP 1 184 835 B1**
(45) Date of publication and mention of the grant of the patent: **23.09.2009**
(21) Application number: 01307409.1
(22) Date of filing: 31.08.2001
(51) Int. Cl.: G09G 3/36

(54) **Multi-format active matrix displays**
Mehrformat-Anzeigevorrichtung mit aktiver Matrix
Dispositifs d'affichage multi-format à matrice active

(30) Priority: 05.09.2000 GB 0021713
(43) Date of publication of application: 06.03.2002
(73) Proprietor: Sharp Kabushiki Kaisha, Osaka 545 (JP)
(72) Inventor: Cairns, Graham Andrew, Cutteslowe, Oxford OX2 8NH (GB); Brownlow, Michael James, Sandford on Thames, Oxford OX4 4AB (GB)
(74) Representative: Asquith, Julian Peter

(56) References cited:
- EP-A- 0 930 716
- EP-A- 0 994 458
- US-A- 4 746 915
- US-A- 5 270 715
- US-A- 5 877 717

## Description

The invention relates to multi-format active matrix displays.

EP-A-0 930 716 describes a non-linear digital-to-analogue converter in which the M most significant bits are supplied to a first stage whereas the N least significant bits are supplied to a second stage.

Multi-format data drivers for controlling active matrix displays are described. The circuits of the drivers may be implemented in discreet driver integrated circuits, connected to the active matrix by direct bonding or via flexible circuit connections. In these cases, the circuits are almost always fabricated from crystalline silicone. Alternatively, the circuits may be integrated on the same substrates as the active matrix devices using the same processing steps. Devices of this type include thin film transistors (TFTs), in particular low and high temperature poly-silicon transistors. The invention is directly applicable to displays of portable equipment where data may be supplied to the display in a variety of formats and where display power consumption must be minimised.

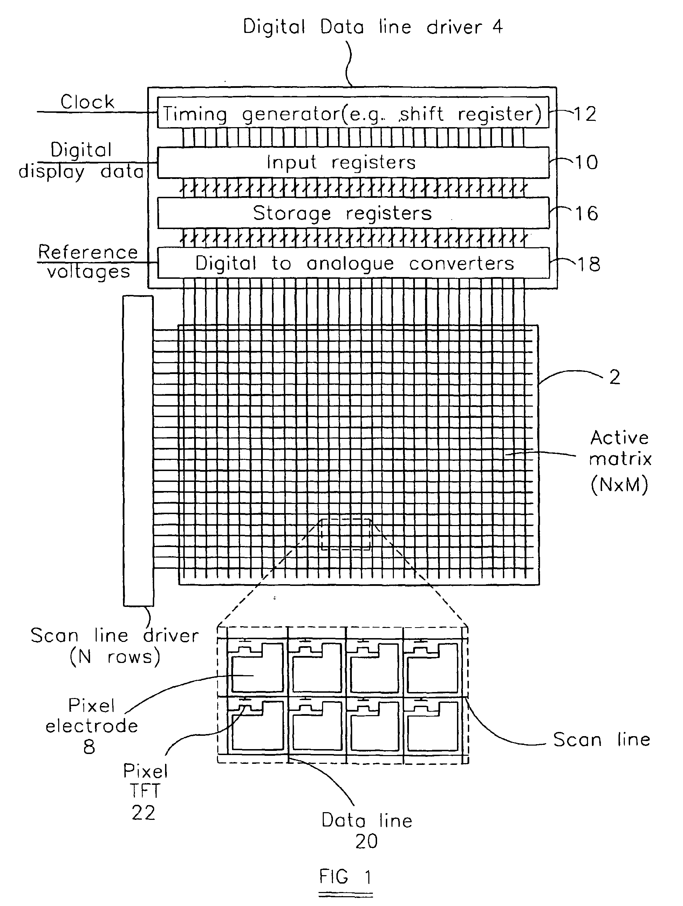

Figure 1 shows a typical active matrix liquid crystal (LC) display 2 composed of N rows and M columns of pixels. The boxes at the periphery of the active matrix represent the display driver electronics. It is the combined function of the digital data line driver 4 and scan line driver 6 to provide analogue data voltages to the electrodes 8 of the LC pixels from a digital image data source.

The digital data driver 4 typically receives image data from an LC controller integrated circuit (not shown). In addition to the image data, the driver 4 also receives control and timing signals such as a clock signal, and frame and line synchronisation signals. Image data is normally transmitted to the digital data driver 4 a line at a time, with each line corresponding to the required display states of a horizontal line of pixels of the display. The digital data driver 4 contains an array of input registers 10, as shown in Figure 1.
As a line of image data is transmitted to the driver 4, each data element is read into one of the input registers 10. The sampling pulses that activate the input registers 10 are generated by the timing generator 12.

Once the entire line of image data has been sampled by the input registers 10, the data is transferred to an array of storage registers 16. During the time that the next line of image data is being transmitted to the driver 4, the data in the storage registers 16 is supplied to digital-to-analogue converter circuits 18.

The digital-to-analogue conversion operation may be non-linear such that it compensates for the liquid crystal voltage/light-transmission characteristics. This transformation is known as gamma correction. Alternatively, the LC controller (not shown) may support gamma correction, in which case the digital-to-analogue conversion within the digital data driver 4 is a linear operation. The outputs of the converters 18 charge the source lines 20 (i.e. data lines) of the active matrix, and the scan driver 6 controls which row of pixels is charged from the source lines 20 through the pixel TFTs 22.

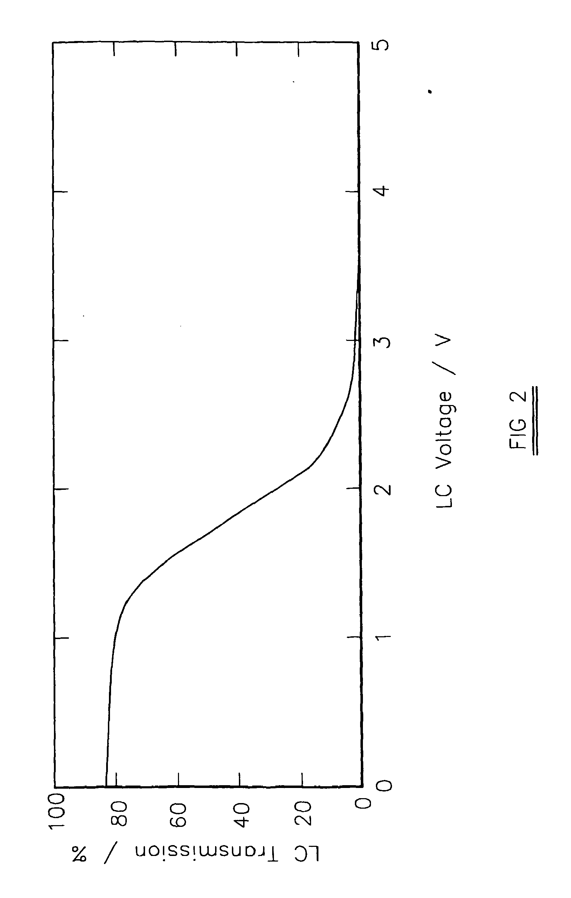

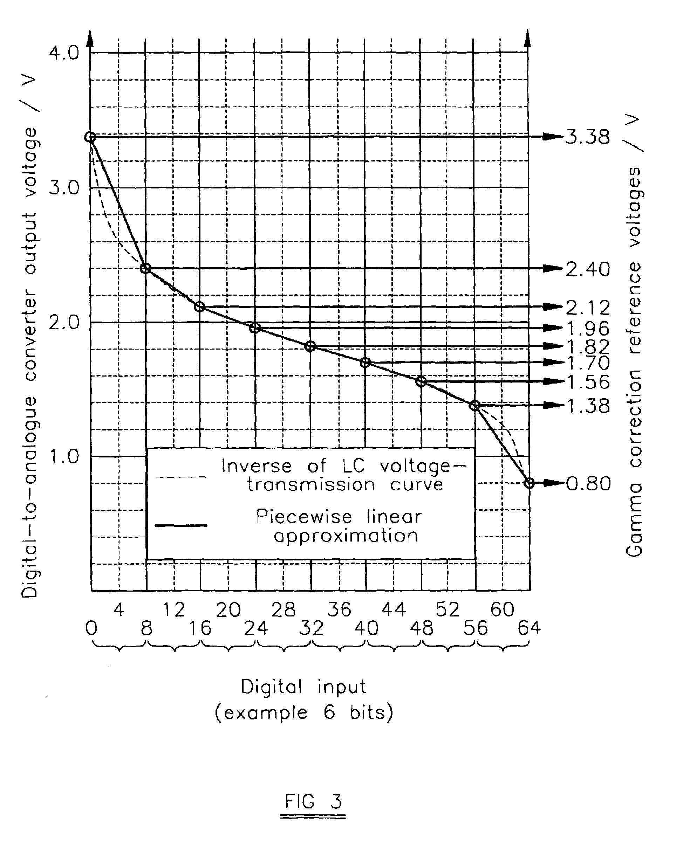

Figure 2 shows a graph of light transmission plotted against electrode voltage for a typical twisted nematic liquid crystal pixel. Gamma correction for liquid crystal active matrix displays involves compensating for the pixel non-linear input voltage/light modulation characteristic. In order to annul the non-linearity such that equal changes in digital input correspond to equal changes in light transmission, a conversion circuit must implement the precise inverse of the function shown in Figure 2. This inverse function is shown as the dashed line in the graph of Figure 3. Along the x-axis is the digital input (6 bits shown in this example), and the y-axis indicates the analogue voltage required from the output of the digital-to-analogue converter.

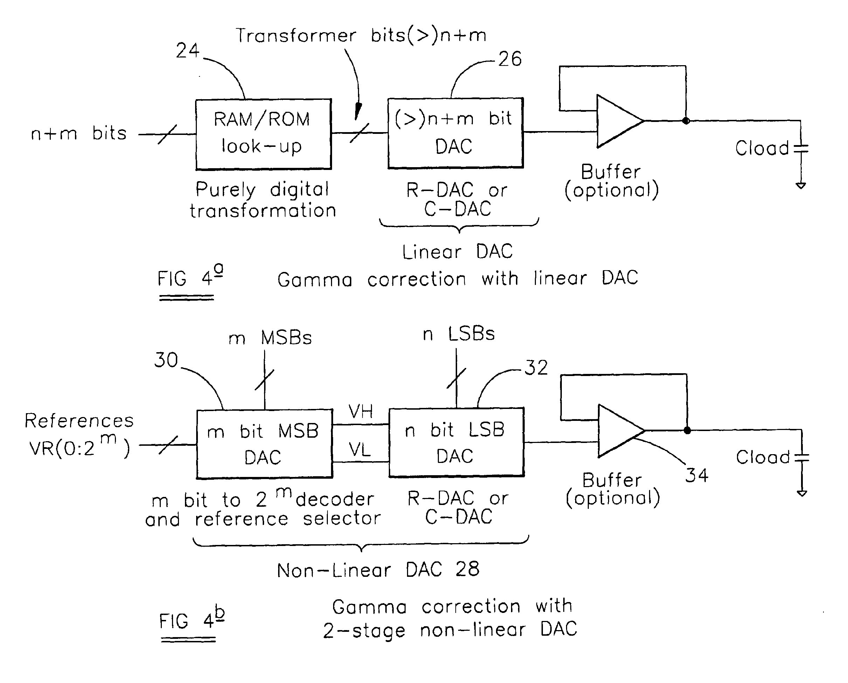

There are two main strategies for implementing gamma correction. The first, shown in Figure 4(a), involves a purely digital transformation. A RAM or ROM circuit 24 takes a digital input having (n+m) bits and generates an output which may have a greater number of bits than the input to preserve accuracy. These bits reflect the desired inverse function such that when they are supplied to a connected linear digital-to-analogue converter 26, the analogue output has the desired response to the input.

The second strategy involves gamma correction with a non-linear two-stage digital-to-analogue converter 28, as depicted in Figure 4(b). This means of gamma correction is discussed in more detail below.

In Figure 4(b), the digital-to-analogue converter (DAC) 28 is composed of two stages. A first stage DAC 30 receives the m most significant bits (MSBs) of the input, and a second stage DAC 32 receives the n least significant bits (LSBs). Reference voltages VR corresponding to each of the digital inputs from 0 to 2^{m} are supplied to the first stage DAC 30. These reference voltages are represented by VR (0:2^{m}) in Figure 4(b). The MSBs are decoded in the first stage by the m bit to 2^{m} line decoder 30 and the result is used to select which two of the 2^{m} + 1 gamma correction reference voltages, VR(0:2^{m}), are supplied to the second stage DAC 32 of the converter 28. The two reference voltages VR supplied to the second stage DAC 32 are the VL and VH voltages indicated in Figure 4(b).

Within the second stage DAC 32, the n LSBs are used to perform a linear digital-to-analogue conversion within the limits defined by VL and VH. The second stage digital-to-analogue converter 32 is typically built from capacitors or resistors, and switches. Because the capacitance of the video or source line load is usually high, a buffer circuit 34 is normally employed at the output of the circuit. The slew rate and settling time of the buffer then defines the minimum conversion time required to obtain a desired bit accuracy. The slew rate is the maximum rate of change of the output voltage of a buffer, and has units of V/s.

In the graph of Figure 3, an example is shown of a 6 bit conversion afforded by such a converter circuit. In this particular example n=3 and m=3. The solid line shows that the actual output is a piecewise linear approximation to the desired output (the dotted line), with the gamma correction reference voltages defining the end-points of the linear element pieces.

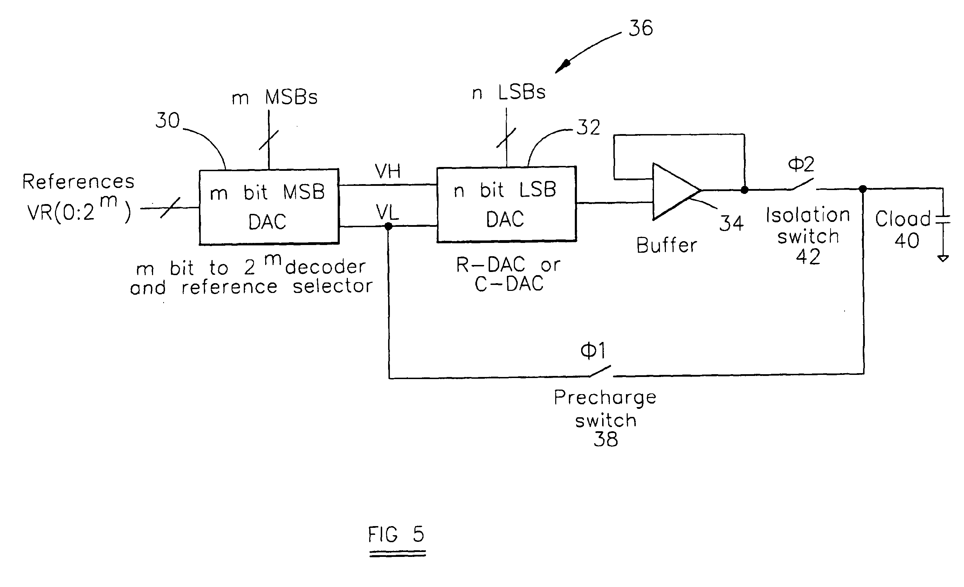

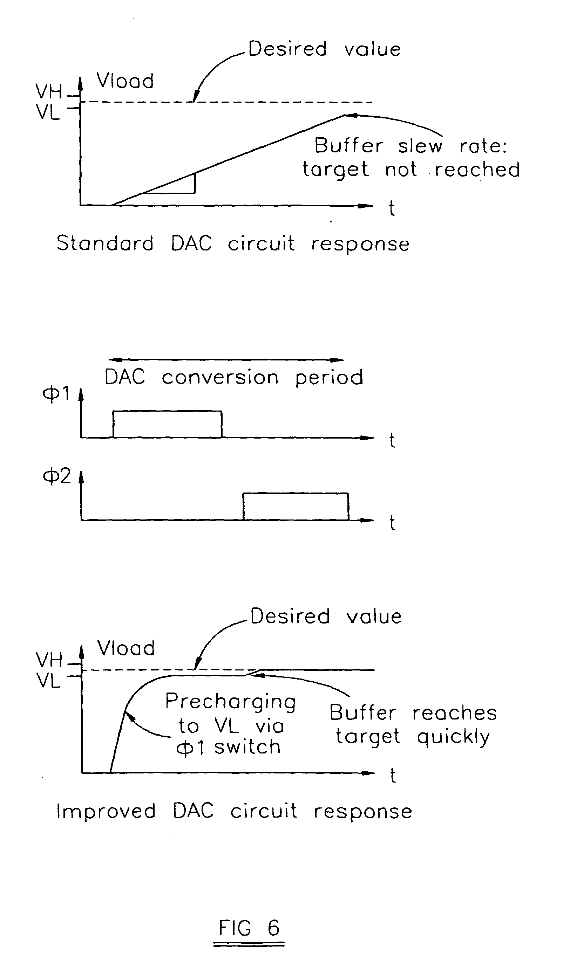

Figure 5 shows a known improved two-stage non-linear digital-to-analogue converter 36 which operates with a smaller conversion time (see British Patent Application No. 0011015.5). In comparison to Figure 4(b), the improved circuit contains two switches which operate on non-overlapping clock phases, Φ₁ and Φ₂ (shown in Figure 6). The first switch 38 denoted the precharge switch, allows the selected reference voltage VL to directly charge the output load 40 on phase Φ₁. The second switch 42, called the isolation switch, is open during the Φ₁ period so that the buffer output is isolated from the load 40. Because VL is a reference supply, the load is quickly charged to within n bits of its final desired value with a time constant defined by the precharge switch resistance and the load capacitance.

During Φ₂, the precharge switch 38 is open, and the buffer 34 applies the (m+n) bit analogue result from the digital-to-analogue converter 36 to the load 40. At this moment, the load 40 has already been charged to within n bits of its final desired value, therefore the buffer output can reach this target much more quickly. A comparison of conversion times between this circuit and the one of Figure 4(b) is shown in Figure 6, in which the top and bottom graphs show the voltage outputs of the circuits of Figures 4(b) and 5 respectively.

The design of the sampling circuits in the input registers 10 and storage registers 16 of Figure 1 may vary considerably depending on integration process technology. This is because the supply voltage for the sampling circuits is a process dependent factor, whereas it is desirable from power consumption considerations that the digital input and control signals are low voltage logic, for example a logic low of 0.0V and a logic high of between 1.0V and 5.0V.

In the case of crystalline silicon integrated circuit drivers, where the supply voltage is the same as the logic input levels, the design of the sampling circuits is simpler, for example standard D-type latches or flip-flops may be used. For the case of poly-silicon (or other TFT) integrated drivers, the higher device threshold voltages may warrant a supply voltage that is significantly higher than the input logic levels for example vdd may be anywhere between 5.0V and 15.0V. The voltage disparity between input and supply means that voltage level is shifting is required within the sampling circuit.

Figure 7 shows a prior art sampling circuit 42 (see British Patent Application No. 0005985.7) suitable for sampling an input logic signal (labelled INPUT in the schematic) that is significantly lower than the supply voltage, vdd. When the SAMPLE control signal is high (vdd), the output (denoted OUTPUT) is a level shifted logic equivalent of the input signal. When the SAMPLE control signal is low (vss), the output is latched. The circuit 42 can be divided into two sub-circuits; a level-shifting sub-circuit constructed with devices M3 to M7, and a latching sub-circuit composed of devices M8 to M13.

The level shifting sub-circuit is activated when SAMPLE is high. P-type devices M4 and M6 are turned on, and N-type device M3 is turned off. Transistors M4 and M5, connected in series between vdd and a reference voltage, vref (which may be vss), together generate a bias voltage at the gate of transistor M7. Device M7 is configured as a common gate amplifier in which its source terminal is the input and its drain terminal, connected to load device M6, is the output. With careful device scaling and selection of vref, the output is a level-shifted logic equivalent of the input, which swings almost to the supply rails. The latching sub-circuit is activated when SAMPLE is low (devices M8 and M11 are turned on), and the logic state of the output is stored by crossed-coupled inverters M9/M10 and M12/M13.

During operation, only one of the sub-circuits is activated and controls the state of the output node, and the other is deactivated. When the level-shifting sub-circuit is activated, i.e. when SAMPLE is high, it is important to note that the power consumption of the circuit is at its highest. This is attributed to the currents flowing between vdd and vref (through M4 and M5) and between vdd and INPUT (through M6 and M7).

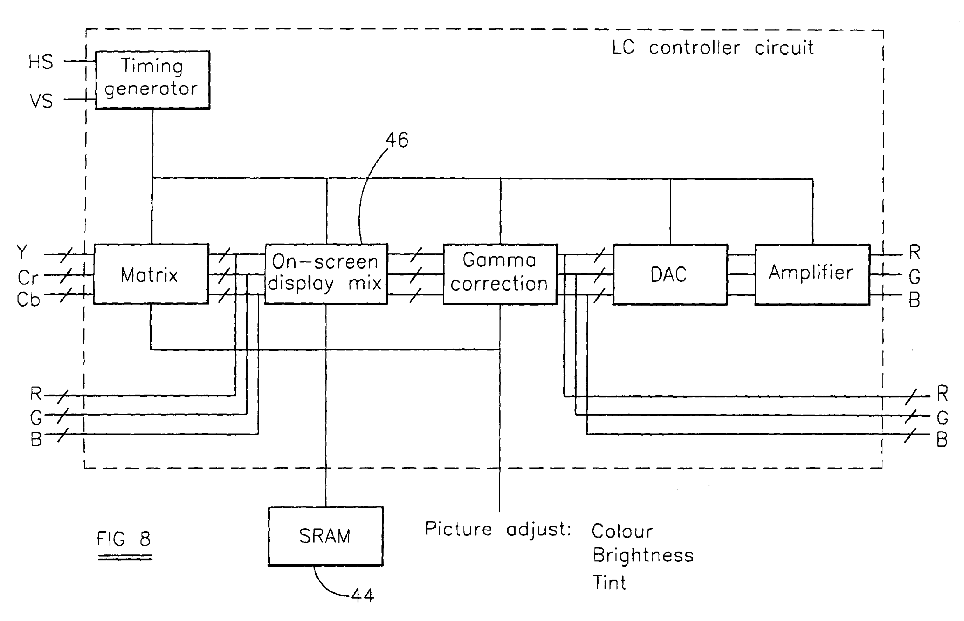

On screen display functions are typically used to overlay video data with simple text or graphical information. An example might be the display brightness setting of a digital cameral which, when selected, is seen superimposed on the camera image provided from the CCD. This functionality is normally provided by an LC controller integrated circuit, such as the general purpose version shown in Figure 8. This 'chip' can take input video data in either luminance and chrominance format or RGB format, and supplies either analogue or digital gamma-corrected RGB to the LC data drivers of an active matrix display. Any on-screen display data, supplied by the SRAM memory 44, is used to overwrite the video data in the display mixer circuit 46 shown. The present invention allows this function to be moved conveniently to the LC data driver circuit(s).

According to the invention there is provided a multi-format active matrix display as set out in the accompanying claims.

Format control signals are used to ensure that only those components are activated which are required for a given format, thus achieving a reduction in power consumption.

Embodiments of the invention will now be more particularly described, by way of example only, with reference to the following drawings, in which:
Figure 1 shows a prior art conventional digital data driver and an active matrix display;
Figure 2 shows the voltage-transmission curve for a typical liquid crystal display pixel;
Figure 3 shows a piecewise linear approximation to the inverse of the voltage-transmission curve of Figure 2, achievable with a prior art 2-stage digital-to-analogue converter;
Figure 4(a) shows a prior art gamma correction circuit with digital input transformation and a linear single-stage n+m bit digital-to-analogue converter;
Figure 4(b) shows a prior art gamma correction circuit with a non-linear two-stage n+m bit digital-to-analogue converter;
Figure 5 shows a prior art non-linear two-stage n+m bit digital-to-analogue converter with improved conversion speed;
Figure 6 shows a comparison of the conversion times required by the digital-to-analogue converter of Figures 4(b) and 5;
Figure 7 shows a prior art single bit low voltage sampling circuit;
Figure 8 shows a prior art typical LC controller integrated circuit including 'on-screen display' capability;
Figure 9 shows an embodiment of the invention, being a multi-format digital data driver which operates in accordance with format control signals;
Figure 10 shows the various display mode capabilities of the multi-format digital data driver, indicating the trade-off between display quality and power consumption;
Figure 11 (a) shows an example set of format control signals and the corresponding multi-format driver operating mode;
Figure 11(b) shows an alternative example set of format control signals and the corresponding multi-format driver operating mode;
Figure 12 indicates diagrammatically how the power consumption of the sampling circuit is controlled by the format control signals;
Figure 13 shows how the bias current power consumption of the sampling circuit of Figure 7 can be controlled by one of the format control signals;
Figure 14 shows how the prior art digital-to-analogue converter of Figure 5 can be adapted for operation in the multi-format digital data driver; and
Figure 15 shows a timing diagram that indicates the phasing of the switches in the digital-to-analogue converter of Figure 14.

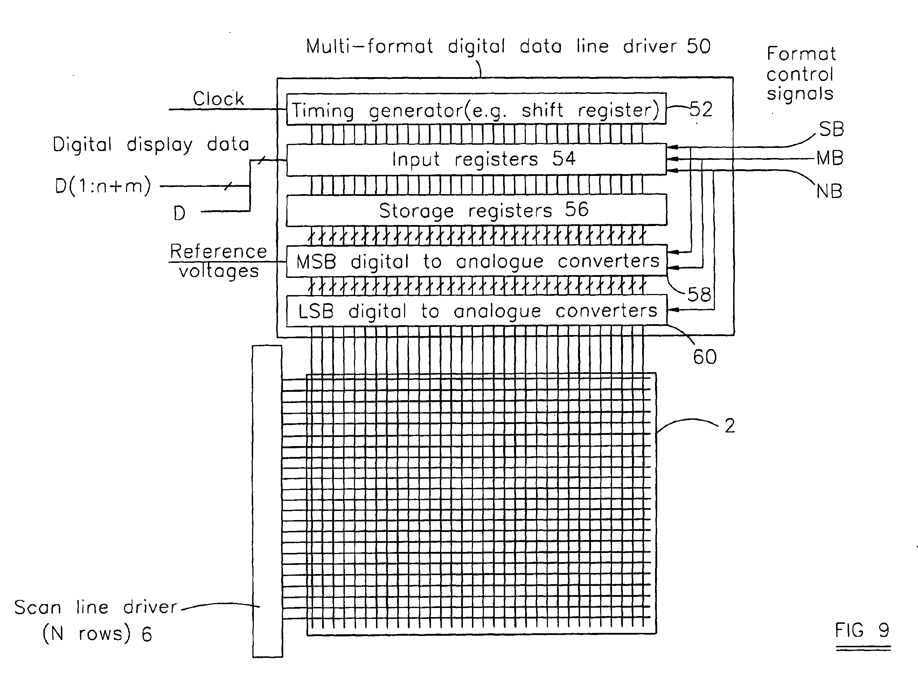

Figure 9 shows a simplified block diagram of an embodiment of the invention. The example shown is monochrome: the extension to colour is straightforward. The multi-format digital data driver 50 is composed of 4 major components: a timing generator 52, an array of input registers 54, an array of storage registers 56 and an array of digital-to-analogue converters. The digital-to-analogue converters are of the two-stage type, described above, and in figure 9 the MSB and LSB converter arrays 58 and 60 respectively are drawn separately.

The multi-format driver 50 takes standard clock and control signals, and two image data inputs: a grey-scale input and a binary input. The grey-scale input, represented D(1:n+m) because it is made up of bits 1 to (n+m) (e.g. bits 1 to 6), is a parallel input of n+m bit width, where m corresponds to the number of most significant data bits of the grey-scale and n to the number of least significant data bits of the grey-scale. This input supplies grey-scale pixel image data with one of two resolutions: high resolution where all n+m bits are read by the driver 50, and low resolution where only the m MSBs are read by the driver 50. The binary input represented D, is a 1 bit input which supplies independent black/white pixel image data.

The two-stage nature of the digital-to-analogue converters permits non-linear conversion, allowing the multi-format driver 50 to provide the gamma correction function. The reference voltages required to do this are shown as being supplied externally in Figure 9, though they may in fact be generated within the driver 50 itself.

The operation mode of the multi-format driver 50, i.e. the driver format, is controlled by the format control signals, also indicated in the diagram. In the example shown, three format control signals, SB, MB and NB are supplied. These are distributed where necessary to the components of the multi-format driver 50 in order that a particular driver format can be enabled with the lowest possible power consumption. The driver formats are described in the next section.

The multi-format driver 50 can operate with various display formats. The choice of driver format may depend on any one of a number of system factors. For example, what image data is available to be displayed? Or, has a system function been selected which demands that graphical data is displayed superimposed on a video image? Or even, what is the power status of the supply that is powering the system? Depending on which factors are most important for a particular system, the states of the format control signals are set such that optimum display efficiency is obtained.

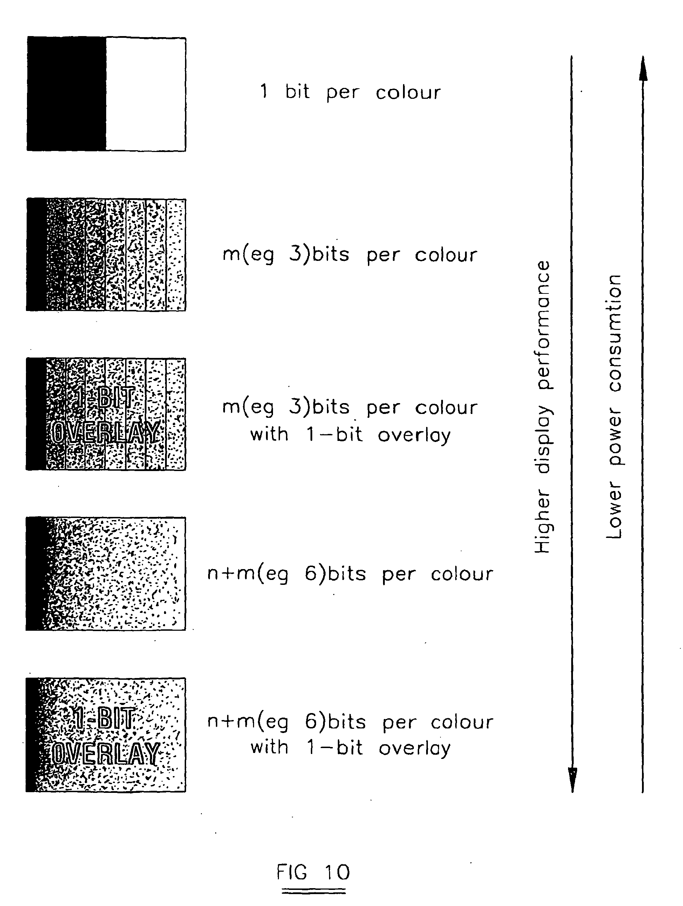

Figure 10 shows the 5 different display formats that are supported by the multi-format driver 50, these being:
(i) 1 bit per colour: The driver 50 only reads image data from the single bit D input stream, and writes one of two reference levels to the source lines of the display 2. The pixels can therefore be set to one of two states which will normally be black and white. The reference levels normally change polarity on a frame by frame basis in order that the liquid crystal material within each pixel cell is DC-balanced over time.
(ii) m bits per colour: The driver 50 only reads image data from the m MSBs of the D(1:n+m) input stream and, following an m bit digital-to-analogue conversion, process, writes the analogue data to the source lines of the display 2. The pixels can be set to one of 2^{m} grey levels.
(iii) m bits per colour with 1 bit overlay: The driver 50 reads image data from the m MSBs of the D(1:n+m) input stream and the single bit D input stream. Following an m bit digital-to-analogue conversion process, the driver 50 writes the data to the display 2, overlaid with the D input data where required. The pixels can be set to one of 2^{m} grey levels.
(iv) n+m bits per colour: The driver 50 reads image data from the D(1:n+m) input stream and, following an n+m bit digital-to-analogue conversion process, writes the data to the source lines of the display 2. The pixels can be set to one of 2^{n+m} grey levels.
(v) n+m bits per colour with 1 bit overlay: The driver 50 reads image data from the D(1:n+m) input stream and the single bit D input stream. Following an n+m bit digital-to-analogue conversion process, the driver 50 writes the data to the display 2, overlaid with the D input data where required. The pixels can be set to one of 2^{n+m} grey levels.

The above display formats are listed in order of increasing display performances, with the last format showing an n+m bit resolution image superimposed with (overlaid by) a second 1 bit image. The multi-format driver 50 ensures that the power consumption for the lower performance display formats is indeed lower. This is achieved by the format control signals which selectively deactivate parts of the driver circuit when they are not required. Embodiments which show this principle are described below.

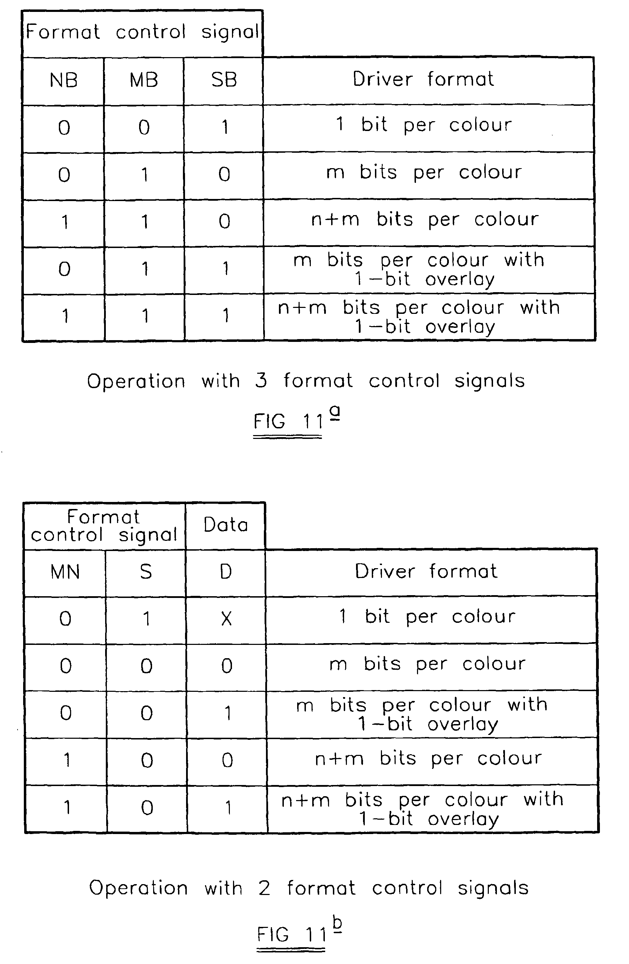

The table in Figure 11(a) shows how the 3 format control signals, SB, MB and NB, are used to select the 5 possible driver format modes described above. Each format control signal is responsible for enabling specific circuits within the multi-format driver 50. SB enables the circuitry associated with the single input data stream, D, which is used during the 1 bit display mode and when the overlay function is applied. MB enables the circuitry associated with the most significant bits of the grey-scale input, represented D(n+1:n+m) and being made up of bits (n+1) to (n+m) (e.g. bits 4 to 6). NB enables the circuitry associated with the least significant bits of the grey-scale input, represented D(1:n) (e.g. bits 1 to 3). In addition to the input signal combinations shown in the table when all format control signals are 0, the multi-format driver is essentially off.

The table in Figure 11(b) shows an alternative set of format control signals, MN and S. Two signals have the advantage of less driver signals, but one would anticipate that only 2² = 4 display formats could be encoded. However, use is made of the D input bit itself to determine if the overlay mode is to be activated. When S=1 (and MN=0), the 1 bit per colour mode is selected and the display is over-written with data supplied by the D input stream. In the other four cases, S=0, and MN determines if high or low resolution data is displayed from the D(1:n+m) input: MN=0 selects low resolution (m bit grey-scale); MN=1 selects high resolution (n+m bit grey-scale). In these modes, any positive data at the D input will overwrite the grey-scale data. The D input must be kept low if no overlay is required.

For simplicity, the circuit examples described herein are shown controlled by 3 format control signals. Similar circuits can be controlled by 2 format control signals with additional control logic.

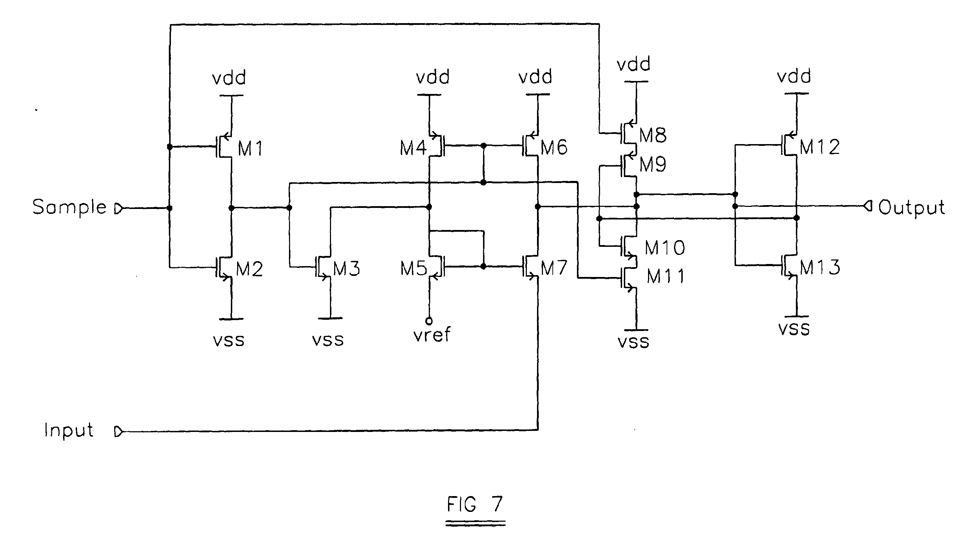

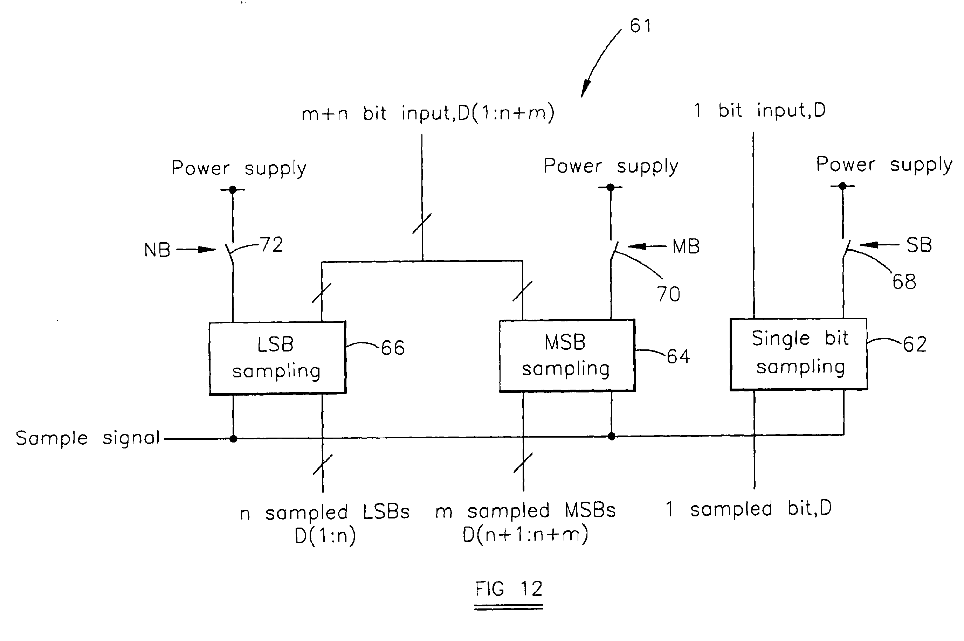

Figure 12 shows an example of the circuitry of a single input register 61 of the input register array 54. This register is responsible for sampling the incoming digital data from both the grey-scale input, D(1:n+m), and the binary input, D. Within the single bit sampling block 62 there is a single bit sampling circuit of the type shown in Figure 7. Within the MSB sampling block 64 there are m single bit sampling circuits, each of the type shown in Figure 7. Within the LSB sampling block 66 there are n single bit sampling circuits, each of the type shown in Figure 7. The power supply to, and therefore the power consumption of each sampling block is controlled by the corresponding format control signal. The SB, MB and NB format control signals control switches 68, 70, and 72, which supply power to the single bit, MSB and LSB sampling blocks respectively. The sampling blocks 62, 64, 66 therefore only consume power when they are required to support one of the display formats. There may be a separate input register of the type shown in Figure 12 for each column of the active matrix display, or alternatively there may be fewer input registers than columns, if the input register are multiplexed (i.e. shared over time) between the columns.

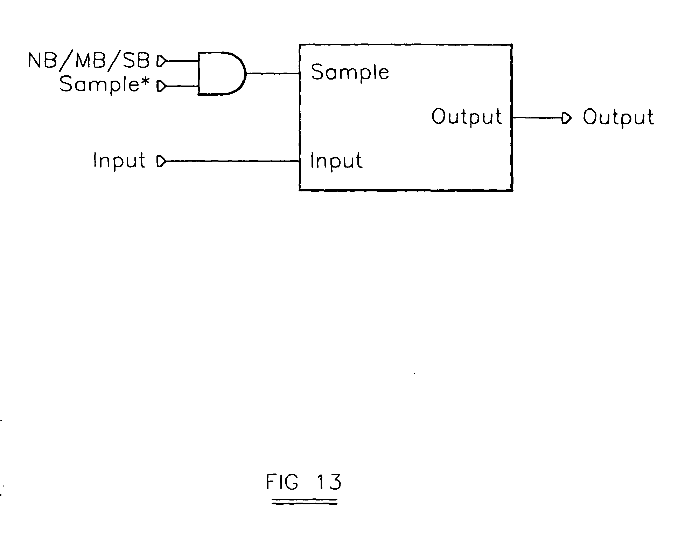

Figure 13 shows a simple method of controlling the power consumption of the single bit sampling circuit of Figures 7. The format control signal is logically ANDed with the SAMPLE* signal so that the single bit sampling circuit only receives a SAMPLE pulse if the format control signal is high. As discussed above, in order that low-voltage sampling can be achieved, this particular circuit consumes significant power through the M4/M5 and M6/M7 transistors when the SAMPLE input is high. The format control signals therefore prevent this power dissipation in the single bit sampling circuits for those bits that are not required.

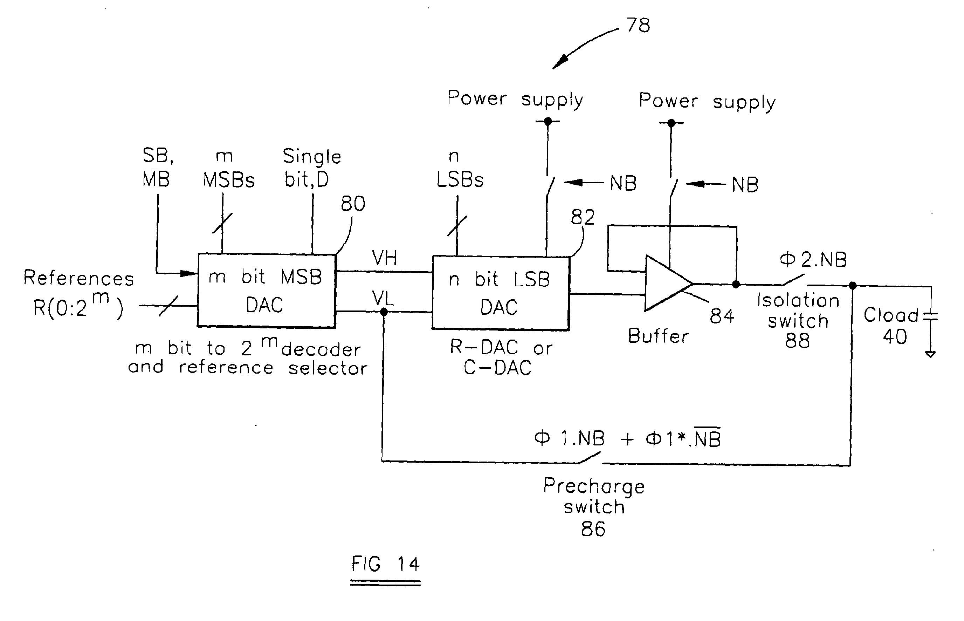

The digital-to-analogue converter 78 that is used in the multi-format drivers 50 is shown in Figure 14. This circuit is a modification of the prior art circuit of Figure 5. As such, the converter can support gamma correction, as previously discussed, with the appropriate VR reference voltages. In order to support the 5 display formats discussed above, the capacitive load 40 (which may be a video line or a source line) can be changed to three degrees of resolution: n+m bits, m bits or 1 bit. These are discussed below.

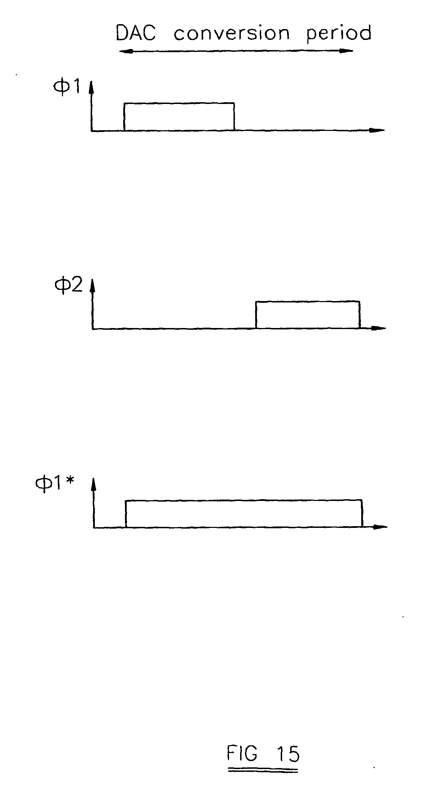

In high resolution (n+m bit) mode, the NB and MB format control signals are activated. It is assumed that SB is low (no overlay). The signals ensure that the MSB decoder circuit 80, LSB digital-to-analogue converter 82 and the buffer circuit 84 are activated. Because of the bias current(s) within the buffer 84, the circuitry is in its highest power consumption configuration. Two non-overlapping time periods Φ₁ and Φ₂ are used, as shown in Figure 15. On Φ₁, in response to the MSBs, the MSB decoder circuit selects the VL and VH voltages and supplies them to the LSB digital-to-analogue converter 82. The precharge switch 86 also ensures that the load 40 is quickly charged to VL, i.e. to within approximately n bits of the desired target voltage. On Φ₂, the LSB digital-to-analogue converter 82 performs the least significant bit conversion (between VL and VH) and the buffer 84 supplies the converted voltage to the load 40 via the isolation switch 88. The load 40 can thus be charged to one of 2^{n+m} different voltage levels.

In low resolution (m bit) mode, the MB and NB format control signals are high and low respectively. It is assumed that SB is low (no overlay). Consequently, the MSB decoder circuit 80 is activated, but the LSB digital-to-analogue converter 82 and the buffer 84 circuit are deactivated. Because the buffer circuit bias currents are turned off, the circuitry consumes much less power in this configuration. During conversion, the isolation switch 88 permanently disconnects the buffer output from the load 40. The precharge switch 86, on the other hand, charges the load 40 with the VL reference voltage selected from the MSB decoder circuit 80. In this way the load 40 can be changed to one of 2^{m} different voltage levels. The duration of closure of the precharge switch can be conveniently extended to ensure that the load 40 is fully charged to the VL reference value within the conversion period. This is because the Φ₂ period (buffer operation) is not required. Figure 15 shows the longer Φ₁* signal which activates the precharge switch in this particular mode.

In one bit resolution mode, the MB and NB format control signals are both low and the SB signal is high. Only the MSB decoder circuit 80 is activated, so again the converter 78 consumes very little power. The operation of the MSB decoder circuit 80 changes to accommodate binary operation. The input MSBs are ignored, and the output supplied to VL depends on the state of D. For example, if D is high, the lowest VR reference voltage is supplied to output VL, and therefore to the load 40. This ensures that a pixel driven by the load 40 is switched white (or becomes fully transmissive, assuming the pixel has the LC response shown in the graph of Figure 2). Conversely, if D is low, the highest VR reference voltage is supplied to output VL and therefore to the load 40. This ensures that the same pixel driven by the load 40 is switched black (or becomes fully opaque). Because the load 40 is only charged through the precharge switch 86, the switch 86 can be closed for longer using the Φ₁* signal described above.

The overlay mode is used in conjunction with the (n+m) bit and m bit modes described above when the SB format control signal is high. When this is the case and D is low, the converter circuit 78 operates exactly as described above for the (n+m) bit and m bit modes, that is as if SB were low. When D is high, however, the operation of the MSB decoder circuit 80 is modified. The lowest VR reference voltage is supplied to output VL, and therefore to the load 40, via the precharge switch 86. This ensures that, irrespective of the grey-scale image data, D(1:n+m), pixels charged from the load 40 are switched white (or become fully transmissive). White (or full colour RBG) overlay can therefore be achieved on top of the grey-scale image.

For n+m bit operation, when D is high, the buffer 84 is not required. Therefore, logic to prevent connection to the load 40 and/or to disable the buffer 84 altogether, can be added to the circuit 78.

It will be appreciated that the described embodiment provides a digital data driver architecture for an active matrix display in which the mode of operation of the driver circuit (and therefore the power consumption of the driver and display) is controlled in accordance with simple additional format control signals supplied to the driver. The different modes are monochrome, colour of various resolution (bit-plane) settings, and a 1 bit superimpose function used in conjunction with any of the other modes. The format control signals can be used to adjust the mode of operation of the driver such that the picture quality and power consumption of the display are optimised. This is particularly relevant to poly-silicon integrated drivers where level shifting circuits, bias generating circuits and buffer tail currents can be disabled to save power. Furthermore, text data overlay of picture data is possible without any data processing within the display controller.

It will be appreciated that, whilst the embodiment described divides the (n+m) bit input into two to provide two different resolutions, further embodiments are possible in which the input is divided into three or more in order to provide three or more different resolutions.

## Claims

1. A multi-format active matrix display comprising a data driver (50) which comprises a multi-format sampling register (61), the sampling register being arranged to operate in either high, or low resolution modes and said multi-format sampling register being **characterised in that** it comprises :
(a) sampler input means arranged to receive a digital input containing at least n+m bits and representing the switching level of a pixel of the display, where n and m are integers;
(b) a first sampler (64) comprising m sampling circuits, each arranged to sample one of m bits of said digital input;
(c) a second sampler (66) comprising n sampling circuits, each arranged to sample one of n bits of said digital input, wherein said m bits are more significant than said n bits; and
(d) a second sampler switch (72) arranged to switch said second sampler (66) on in said high resolution mode and off in said low resolution mode, so as to ensure that the second sampler consumes no, or at least less, power when the sampling register operates in said low resolution mode.

2. A multi-format display as claimed in claim 1, wherein said second sampler switch is controlled in response to a separate n bit format control signal, which is activated when it is required to make use of said n bits of the digital input.

3. A multi-format display as claimed in claim 1 or 2, wherein the sampling register further comprises:
a single bit sampling circuit (62) arranged to sample single bit input; and
a single bit switch (68) arranged to switch the single bit sampling circuit on or off.

4. A multi-format display as claimed in claim 3, wherein said multi-format sampling register is arranged to operate in an overlay mode, and wherein said single bit switch (68) is provided with control means arranged to switch the single bit sampling circuit (62) on in said overlay mode and off at other times, so as to ensure that the single bit sampling circuit (62) consumes no, or at least less, power when the sampling register (61) is not in said overlay mode.

5. A multi-format display as claimed in claim 4, wherein said control means is responsive to a separate single bit format control signal, which is activated when it is required to make use of said single bit input.

6. A multi-format display as claimed in any one of claims 3 to 5, which is capable of operating in a single bit display mode in which all pixels of the display are set to only two different switching levels represented by said single bit input, and which further comprises a first sampler switch (70) arranged to switch said first sampler (64) off in said single bit display mode, and wherein said second sampler switch (72) is also arranged to switch off said second sampler (66) in said single bit display mode, so as to ensure that said first and second samplers consume no, or at least less, power in said single bit display mode.

7. A multi-format display as claimed in claim 6, wherein said first sampler switch (70) is controlled in response to a separate m bit format control signal, which is activated when it is required to make use of said m bits of the digital input.

8. A multi-format display as claimed in any preceding claim, wherein said data driver (50) further comprises a multi-format digital to analogue converter (78), the digital to analogue converter (78) being arranged to operate in either low or high resolution modes, and comprising:
(a) converter input means arranged to receive a digital input containing at least n+m bits and representing the switching level of a pixel of the display, where n and m are integers;
(b) a decoder (80) arranged to receive m bits of said digital input, and also to receive 2^{m}+1 reference voltages each corresponding to a different value of said m bits, and having lower and higher decoder outputs which provide lower and higher decoder output voltages respectively, which are a consecutive pair of said reference voltages, with one of said consecutive pair corresponding to the value of said m bits;
(c) an n bit digital-to-analogue converter (82) arranged to receive n bits of said digital input, wherein said m bits are more significant than said n bits, and having a converter output which provides a converter output voltage corresponding to said n+m bit digital input for supply to said pixel of the display; and
(d) an n bit converter switch for switching said n bit digital-to-analogue converter on in said high resolution mode and off during said low resolution mode, so as to ensure that said n bit digital-to-analogue converter consumes no, or at least less power in said low resolution mode.

9. A multi-format display as claimed in claim 8, wherein said n bit converter switch is controlled in response to a separate n bit format control signal, which is activated when it is required to make use of said n bits of the digital input.

10. A multi-format display as claimed in claim 8 or 9, wherein said digital-to-analogue converter (82) further comprises a buffer (84) arranged to receive said converter output voltage, and supply a buffer output to the data line corresponding with said pixel.

11. A multi-format display as claimed in claim 10, wherein said digital-to-analogue converter (82) further comprises a buffer switch arranged to switch said buffer (84) on in said high resolution mode and off in said low resolution mode, so as to ensure that the buffer (84) consumes no, or at least less, power in said low resolution mode.

12. A multi-format display as claimed in claim 11, wherein said buffer switch is controlled in response to a separate n bit format control signal, which is activated when it is required to make use of said n bits of the digital input.

13. A multi-format display as claimed in any one of claims 8 to 12, wherein the digital-to-analogue converter (82) further comprises:
a precharge switch (86) located between said lower decoder output and the data line corresponding with said pixel, and
an isolation switch (88) which is located between said converter output and the data line corresponding with said pixel.

14. A multi-format display as claimed in claim 13, wherein the digital-to-analogue converter (82) further comprises a timing circuit for providing first and second non-overlapping time periods, and wherein in said high resolution mode said precharge switch (86) is closed only during said first time period and said isolation switch (88) is closed only during said second time period.

15. A multi-format display as claimed in claim 14, wherein during said low resolution mode, the isolation switch (88) remains open, and the precharge switch (86) is closed for an extended period, which is longer than said first time period.

16. A multi-format display as claimed in any of claims 8 to 15 which is capable of operating in an overlay mode in which overlay information represented by a single bit input is displayed on the display in a single colour, wherein in said overlay mode said decoder (80) is arranged to receive said single bit input and to provide a decoder output voltage which causes said pixel to switch to said colour when indicated by said single bit input.

17. A multi-format display as claimed in claim 16, which is capable of operating in a single bit display mode in which all pixels of the display are set to only two different switching levels represented by said single bit input, wherein in said single bit display mode said decoder (80) is arranged to receive said single bit input and to provide a decoder output voltage which is at one of two levels depending on the value of the single bit input, and wherein said n bit converter switch is arranged to switch off the n bit digital to analogue converter (82) in said single bit display mode.

18. A multi-format display as claimed in claim 17 when also dependent on claim 11, wherein said buffer switch is arranged to switch off said buffer (84) in said single bit display mode.

19. A multi-format active matrix display as claimed in any preceding claim, wherein said data driver (50) is integrated monolithically on the same substrate as thin film transistors of the active matrix.

20. A multi-format active matrix display as claimed in claim 19, wherein the thin film transistors are poly-silicon.

## Patentansprüche

1. Multiformat-Aktivmatrixanzeige mit einem Datentreiber (50), der ein Multiformat-Abtastregister (61) enthält, wobei das Abtastregister dazu ausgelegt ist, entweder in einem Modus mit hoher Auflösung oder in einem Modus mit niedriger Auflösung zu arbeiten, wobei das Multiformat-Abtastregister **dadurch gekennzeichnet ist, dass** es enthält:
(a) Abtaster-Eingangsmittel, die dazu ausgelegt sind, einen digitalen Eingang zu empfangen, der wenigstens n + m Bits enthält und den Schaltpegel eines Pixel der Anzeige repräsentiert, wobei n und m ganze Zahlen sind,
(b) einen ersten Abtaster (64), der m Abtastschaltungen enthält, wovon jede dazu ausgelegt ist, eines von m Bits des digitalen Eingangs abzutasten;
(c) einen zweiten Abtaster (66), der n Abtastschaltungen enthält, wovon jede dazu ausgelegt ist, eines von n Bits des digitalen Eingangs abzutasten, wobei die m Bits höherwertiger als die n Bits sind; und
(d) einen Schalter (72) des zweiten Abtasters, der dazu ausgelegt ist, im Modus mit hoher Auflösung den zweiten Abtaster (66) einzuschalten und ihn im Modus mit niedriger Auflösung auszuschalten, um so sicherzustellen, dass der zweite Abtaster keine oder zumindest weniger Leistung verbraucht, wenn das Abtastregister im Modus mit niedriger Auflösung arbeitet.

2. Multiformatanzeige nach Anspruch 1, wobei der Schalter des zweiten Abtasters in Reaktion auf ein separates Steuersignal im n-Bit-Format gesteuert wird, das aktiviert wird, wenn es erforderlich ist, von den n Bits des digitalen Eingangs Gebrauch zu machen.

3. Multiformatanzeige nach Anspruch 1 oder 2, wobei das Abtastregister ferner enthält:
eine Einzelbit-Abtastschaltung (62), die dazu ausgelegt ist, einen Einzelbiteingang abzutasten; und
einen Einzelbitschalter (68), der dazu ausgelegt ist, die Einzelbit-Abtastschaltung ein- oder auszuschalten.

4. Multiformatanzeige nach Anspruch 3, wobei das Multiformat-Abtastregister dazu ausgelegt ist, in einem Überlagerungsmodus zu arbeiten, und wobei der Einzelbitschalter (68) mit Steuermitteln versehen ist, die dazu ausgelegt sind, die Einzelbit-Abtastschaltung (62) im Überlagerungsmodus einzuschalten und sonst auszuschalten, um so sicherzustellen, dass die Einzelbit-Abtastschaltung (62) keine oder zumindest weniger Leistung verbraucht, wenn das Abtastregister (61) nicht im Überlagerungsmodus ist.

5. Multiformatanzeige nach Anspruch 4, wobei die Steuermittel auf ein separates Steuersignal im Einzelbitformat ansprechen, das aktiviert wird, wenn es erforderlich ist, von dem Einzelbiteingang Gebrauch zu machen.

6. Multiformatanzeige nach einem der Ansprüche 3 bis 5, die in einem Einzelbit-Anzeigemodus arbeiten kann, in dem alle Pixel der Anzeige auf nur zwei verschiedene Schaltpegel, die durch den Einzelbiteingang repräsentiert werden, gesetzt sind, und die ferner einen Schalter (70) des ersten Abtasters enthält, der dazu ausgelegt ist, den ersten Abtaster (64) im Einzelbit-Anzeigemodus auszuschalten, wobei der Schalter (72) des zweiten Abtasters ebenfalls dazu ausgelegt ist, den zweiten Abtaster (66) im Einzelbit-Anzeigemodus auszuschalten, um so sicherzustellen, dass der erste und der zweite Abtaster im Einzelbit-Anzeigemodus keine oder zumindest weniger Leistung verbrauchen.

7. Multiformatanzeige nach Anspruch 6, wobei der Schalter (70) des ersten Abtasters in Reaktion auf ein separates Steuersignal im m-Bit-Format gesteuert wird, das aktiviert wird, wenn es erforderlich ist, von den m Bits des digitalen Eingangs Gebrauch zu machen.

8. Multiformatanzeige nach einem vorhergehenden Anspruch, wobei der Datentreiber (50) ferner einen Multiformat-Digital/Analog-Umsetzer (78) enthält, wobei der Digital/Analog-Umsetzer (78) dazu ausgelegt ist, entweder im Modus mit niedriger Auflösung oder im Modus mit hoher Auflösung zu arbeiten, mit:
(a) Umsetzereingangsmitteln, die dazu ausgelegt sind, einen digitalen Eingang zu empfangen, der wenigstens n + m Bits enthält und den Schaltpegel eines Pixel der Anzeige repräsentiert, wobei n und m ganze Zahlen sind;
(b) einem Decodierer (80), der dazu ausgelegt ist, m Bits des digitalen Eingangs zu empfangen und außerdem 2^{m} + 1 Referenzspannungen zu empfangen, wovon jede einem unterschiedlichen Wert der m Bits entspricht, und niedrigere und höhere Decodiererausgänge aufweist, die niedrigere bzw. höhere Decodierer-Ausgangsspannungen bereitstellen, die ein aufeinander folgendes Paar der Referenzspannungen sind, wobei eine des aufeinander folgenden Paars dem Wert der m Bits entspricht;
(c) einem n-Bit-Digital/Analog-Umsetzer (82), der dazu ausgelegt ist, n Bits des digitalen Eingangs zu empfangen, wobei die m Bits höherwertiger als die n Bits sind, und der einen Umsetzerausgang besitzt, der eine Umsetzerausgangsspannung bereitstellt, die dem digitalen n + m-Bit-Eingang entspricht, um die Pixel der Anzeige zu versorgen; und
(d) einem n-Bit-Umsetzerschalter, um den n-Bit-Digital/Analog-Umsetzer im Modus mit hoher Auflösung einzuschalten und während des Modus mit niedriger Auflösung auszuschalten, um so sicherzustellen, dass der n-Bit-Digital/Analog-Umsetzer im Modus mit niedriger Auflösung keine oder zumindest weniger Leistung verbraucht.

9. Multiformatanzeige nach Anspruch 8, wobei der n-Bit-Umsetzerschalter in Reaktion auf ein separates Steuersignal im n-Bit-Format gesteuert wird, das aktiviert wird, wenn es erforderlich ist, von den n Bits des digitalen Eingangs Gebrauch zu machen.

10. Multiformatanzeige nach Anspruch 8 oder 9, wobei der Digital/Analog-Umsetzer (82) ferner einen Puffer (84) enthält, der dazu ausgelegt ist, die Umsetzerausgangsspannung zu empfangen und einen Pufferausgang an die dem Pixel entsprechende Datenleitung zu liefern.

11. Multiformatanzeige nach Anspruch 10, wobei der Digital/Analog-Umsetzer (82) ferner einen Pufferschalter enthält, der dazu ausgelegt ist, den Puffer (84) im Modus mit hoher Auflösung einzuschalten und im Modus mit niedriger Auflösung auszuschalten, um so sicherzustellen, dass der Puffer (84) im Modus mit niedriger Auflösung keine oder zumindest weniger Leistung verbraucht.

12. Multiformatanzeige nach Anspruch 11, wobei der Pufferschaltung in Reaktion auf ein separates Steuersignal im n-Bit-Format gesteuert wird, das aktiviert wird, wenn es erforderlich ist, von den n Bits des digitalen Eingangs Gebrauch zu machen.

13. Multiformatanzeige nach einem der Ansprüche 8 bis 12, wobei der Digital/Analog-Umsetzer (82) ferner enthält:
einen Vorladungsschalter (86), der sich zwischen dem niedrigeren Decodiererausgang und der dem Pixel entsprechenden Datenleitung befindet, und
einen Trennschalter (88), der sich zwischen dem Umsetzerausgang und der dem Pixel entsprechenden Datenleitung befindet.

14. Multiformatanzeige nach Anspruch 13, wobei der Digital/Analog-Umsetzer (82) ferner eine Zeitgeberschaltung enthält, um eine erste und eine zweite Zeitdauer, die nicht überlappen, bereitzustellen, und wobei der Vorladungsschalter (86) im Modus mit hoher Auflösung nur während der ersten Zeitdauer geschlossen ist und der Trennschalter (88) nur während der zweiten Zeitdauer geschlossen ist.

15. Multiformatanzeige nach Anspruch 14, wobei während des Modus mit niedriger Auflösung der Trennschalter (88) offen bleibt und der Vorladungsschalter (86) für eine verlängerte Dauer, die länger als die erste Zeitdauer ist, geschlossen ist.

16. Multiformatanzeige nach einem der Ansprüche 8 bis 15, die in einem Überlagerungsmodus arbeiten kann, in dem Überlagerungsinformationen, die durch einen Einzelbiteingang repräsentiert werden, auf der Anzeige in einer einzigen Farbe angezeigt werden, wobei in dem Überlagerungsmodus der Decodierer (80) dazu ausgelegt ist, den Einzelbiteingang zu empfangen und eine Decodierer-Ausgangsspannung bereitzustellen, die das Pixel dazu veranlasst, zu dieser Farbe zu schalten, wenn dies durch den Einzelbiteingang angegeben wird.

17. Multiformatanzeige nach Anspruch 16, die in einem Einzelbit-Anzeigemodus arbeiten kann, in dem alle Pixel der Anzeige auf nur zwei verschiedene Schaltpegel gesetzt sind, die durch den Einzelbiteingang repräsentiert werden, wobei in dem Einzelbit-Anzeigemodus der Decodierer (80) dazu ausgelegt ist, den Einzelbiteingang zu empfangen und eine Decodierer-Ausgangsspannung bereitzustellen, die in Abhängigkeit von dem Wert des Einzelbiteingangs einen von zwei Pegeln hat, wobei der n-Bit-Umsetzerschalter dazu ausgelegt ist, den n-Bit-Digital/Analog-Umsetzer (82) im Einzelbit-Anzeigemodus auszuschalten.

18. Multiformatanzeige nach Anspruch 17, wenn außerdem abhängig von Anspruch 11, wobei der Pufferschalter dazu ausgelegt ist, den Puffer (84) im Einzelbit-Anzeigemodus auszuschalten.

19. Multiformat-Aktivmatrixanzeige nach einem vorhergehenden Anspruch, wobei der Datentreiber (50) auf demselben Substrat in Form von Dünnschichttransistoren der Aktivmatrix monolithisch integriert ist.

20. Multiformat-Aktivmatrixanzeige nach Anspruch 19, wobei die Dünnschichttransistoren Polysilicium sind.

## Revendications

1. Dispositif d'affichage multi-format à matrice active comprenant un circuit d'attaque de données (50) qui comprend un registre d'échantillonnage multi-format (61), le registre d'échantillonnage étant conçu pour fonctionner en mode haute résolution ou en mode basse résolution et ledit registre d'échantillonnage multi-format étant **caractérisé en ce qu'**il comprend :
(a) des moyens d'entrée d'échantillonneur conçus pour recevoir une entrée numérique contenant au moins n+m bits et représentant le niveau de commutation d'un pixel du dispositif d'affichage, n et m étant des nombres entiers ;
(b) un premier échantillonneur (64) comprenant m circuits d'échantillonnage, conçus chacun pour échantillonner l'un des m bits de ladite entrée numérique ;
(c) un second échantillonneur (66) comprenant n circuits d'échantillonnage, conçus chacun pour échantillonner l'un des n bits de ladite entrée numérique, lesdits m bits étant plus significatifs que lesdits n bits; et
(d) un commutateur de second échantillonneur (72) conçu pour commuter ledit second échantillonneur (66) sur marche dans ledit mode haute résolution et sur arrêt dans ledit mode basse résolution de façon à faire en sorte que le second échantillonneur ne consomme aucune énergie, ou, au moins, moins d'énergie lorsque le registre d'échantillonnage fonctionne dans ledit mode basse résolution.

2. Dispositif d'affichage multi-format selon la revendication 1, dans lequel ledit commutateur de second échantillonneur est commandé en réponse à un signal de commande séparé de format n bits, ce signal étant activé lorsque l'utilisation desdits n bits de l'entrée numérique est requise.

3. Dispositif d'affichage multi-format selon la revendication 1 ou la revendication 2, dans lequel le registre d'échantillonnage comprend en outre :
un circuit d'échantillonnage à un seul bit (62) conçu pour échantillonner une entrée à un seul bit ; et
un commutateur à un seul bit (68) conçu pour commuter le circuit d'échantillonnage à un seul bit sur marche ou arrêt.

4. Dispositif d'affichage multi-format selon la revendication 3, dans lequel ledit registre d'échantillonnage multi-format est conçu pour fonctionner dans un mode superposition, et dans lequel ledit commutateur à un seul bit (68) est doté de moyens de commande conçus pour commuter le circuit d'échantillonnage à un seul bit (62) sur marche dans ledit mode superposition et sur arrêt à d'autres moments, de façon à faire en sorte que le circuit d'échantillonnage à un seul bit (62) ne consomme aucune énergie, ou, au moins, moins d'énergie, lorsque le registre d'échantillonnage (61) n'est pas dans ledit mode superposition.

5. Dispositif d'affichage multi-format selon la revendication 4, dans lequel lesdits moyens de commande réagissent à un signal de commande séparé de format un bit, ce signal étant activé lorsque l'utilisation de ladite entrée à un seul bit est requise.

6. Dispositif d'affichage multi-format selon l'une quelconque des revendications 3 à 5, qui est capable de fonctionner dans un mode d'affichage à un seul bit dans lequel tous les pixels du dispositif d'affichage sont placés sur seulement deux niveaux de commutation différents représentés par ladite entrée à un seul bit, et qui, en outre, comprend un commutateur de premier échantillonneur (70) conçu pour commuter ledit premier échantillonneur (64) sur arrêt dans ledit mode d'affichage à un seul bit, et dans lequel ledit commutateur de second échantillonneur (72) est également conçu pour commuter sur arrêt ledit second échantillonneur (66) dans ledit mode d'affichage à un seul bit, de façon à faire en sorte que lesdits premier et second échantillonneurs ne consomment aucune énergie, ou, au moins, moins d'énergie, dans ledit mode d'affichage à un seul bit.

7. Dispositif d'affichage multi-format selon la revendication 6, dans lequel ledit commutateur de premier échantillonneur (70) est commandé en réponse à un signal de commande séparé de format m bits, ce signal étant activé lorsque l'utilisation desdits m bits de l'entrée numérique est requise.

8. Dispositif d'affichage multi-format selon l'une quelconque des revendications précédentes, dans lequel ledit circuit d'attaque de données (50) comprend en outre un convertisseur numérique-analogique multi-format (78), le convertisseur numérique-analogique (78) étant conçu pour fonctionner en mode haute résolution ou en mode basse résolution, et comprenant :
(a) des moyens d'entrée de convertisseur conçus pour recevoir une entrée numérique contenant au moins n+m bits et représentant le niveau de commutation d'un pixel du dispositif d'affichage, n et m étant des nombres entiers ;
(b) un décodeur (80) conçu pour recevoir m bits de ladite entrée numérique, et également pour recevoir 2^{m}+1 tensions de référence correspondant chacune à une valeur différente desdits m bits, et comportant des sorties de décodeur inférieure et supérieure qui fournissent des tensions de sortie de décodeur inférieure et supérieure, respectivement, lesquelles constituent une paire consécutive desdites tensions de référence, l'une des tensions de référence de ladite paire consécutive correspondant à la valeur desdits m bits ;
(c) un convertisseur numérique-analogique à n bits (82) conçu pour recevoir n bits de ladite entrée numérique, lesdits m bits étant plus significatifs que lesdits n bits, et comportant une sortie de convertisseur qui fournit une tension de sortie de convertisseur correspondant à ladite entrée numérique de n+m bits en vue de sa fourniture audit pixel du dispositif d'affichage ; et
(d) un commutateur de convertisseur à n bits servant à commuter ledit convertisseur numérique-analogique à n bits sur marche dans ledit mode haute résolution et sur arrêt dans ledit mode basse résolution de façon à faire en sorte que ledit convertisseur numérique-analogique à n bits ne consomme aucune énergie, ou, au moins, moins d'énergie, dans ledit mode basse résolution.

9. Dispositif d'affichage multi-format selon la revendication 8, dans lequel ledit commutateur de convertisseur à n bits est commandé en réponse à un signal de commande séparé de format n bits, ce signal étant activé lorsque l'utilisation desdits n bits de l'entrée numérique est requise.

10. Dispositif d'affichage multi-format selon la revendication 8 ou la revendication 9, dans lequel ledit convertisseur numérique-analogique (82) comprend en outre un tampon (84) conçu pour recevoir ladite tension de sortie de convertisseur et fournir une sortie de tampon à la ligne de données correspondant audit pixel.

11. Dispositif d'affichage multi-format selon la revendication 10, dans lequel ledit convertisseur numérique-analogique (82) comprend en outre un commutateur de tampon conçu pur commuter ledit tampon (84) sur marche dans ledit mode haute résolution et sur arrêt dans ledit mode basse résolution de façon à faire en sorte que le tampon (84) ne consomme aucune énergie, ou, au moins, moins d'énergie, dans ledit mode basse résolution.

12. Dispositif d'affichage multi-format selon la revendication 11, dans lequel ledit commutateur de tampon est commandé en réponse à un signal de commande séparé de format n bits, ce signal étant activé lorsque l'utilisation desdits n bits de l'entrée numérique est requise.

13. Dispositif d'affichage multi-format selon l'une quelconque des revendications 8 à 12, dans lequel le convertisseur numérique-analogique (82) comprend en outre :
un commutateur de précharge (86) situé entre ladite sortie de décodeur inférieure et la ligne de données correspondant audit pixel, et
un commutateur d'isolation (88) qui est situé entre ladite sortie de convertisseur et la ligne de données correspondant audit pixel.

14. Dispositif d'affichage multi-format selon la revendication 13, dans lequel le convertisseur numérique-analogique (82) comprend en outre un circuit de cadencement servant à fournir des première et seconde périodes de temps non chevauchantes, et dans lequel, dans ledit mode haute résolution, ledit commutateur de précharge (86) est fermé uniquement durant ladite première période de temps et ledit commutateur d'isolation (88) est fermé uniquement pendant ladite seconde période de temps.

15. Dispositif d'affichage multi-format selon la revendication 14, dans lequel, pendant ledit mode basse résolution, le commutateur d'isolation (88) reste ouvert, et le commutateur de précharge (86) est fermé pendant une période étendue, laquelle est plus longue que ladite première période de temps.

16. Dispositif d'affichage multi-format selon l'une quelconque des revendications 8 à 15 qui est capable de fonctionner dans un mode superposition dans lequel des informations de superposition représentées par une entrée à un seul bit sont affichées sur le dispositif d'affichage en une seule couleur, dans lequel, dans ledit mode superposition, ledit décodeur (80) est conçu pour recevoir ladite entrée à un seul bit et fournir une tension de sortie de décodeur qui amène ledit pixel à commuter sur ladite couleur lorsque ceci est indiqué par ladite entrée à un seul bit.

17. Dispositif d'affichage multi-format selon la revendication 16, qui est capable de fonctionner dans un mode d'affichage à un seul bit dans lequel tous les pixels du dispositif d'affichage sont placés sur seulement deux niveaux de commutation différents représentés par ladite entrée à un seul bit, dans lequel, dans ledit mode d'affichage à un seul bit, ledit décodeur (80) est conçu pour recevoir ladite entrée à un seul bit et pour fournir une tension de sortie de décodeur qui est à l'un de deux niveaux selon la valeur de l'entrée à un seul bit, et dans lequel ledit commutateur de convertisseur à n bits est conçu pour commuter sur arrêt le convertisseur numérique-analogique à n bits (82) dans ledit mode d'affichage à un seul bit.

18. Dispositif d'affichage multi-format selon la revendication 17 lorsqu'elle dépend également de la revendication 11, dans lequel ledit commutateur de tampon est conçu pour commuter sur arrêt ledit tampon (84) dans ledit mode d'affichage à un seul bit.

19. Dispositif d'affichage multi-format à matrice active selon l'une quelconque des revendications précédentes, dans lequel ledit circuit d'attaque de données (50) est intégré de façon monolithique sur le même substrat sous la forme de transistors à couche mince de la matrice active.

20. Dispositif d'affichage multi-format à matrice active selon la revendication 19, dans lequel les transistors à couche mince sont en polysilicium.
